Europäisches Patentamt

European Patent Office

Office européen des brevets

(19)

(11) Numéro de publication : **0 103 550 B1**

(12) **FASCICULE DE BREVET EUROPÉEN**

(45) Date de publication du fascicule du brevet :
07.06.89

(51) Int. Cl.⁴ : **G 01 G 23/01**

(21) Numéro de dépôt : **83830175.2**

(22) Date de dépôt : **08.09.83**

---

(54) **Dispositif et procédé pour la compensation automatique des variations de l'accélération de gravité dans les instruments de pesage à équilibre automatique, à fonctionnement électronique.**

---

(30) Priorité : **14.09.82 IT 2324182**

(43) Date de publication de la demande :
**21.03.84 Bulletin 84/12**

(45) Mention de la délivrance du brevet :
**07.06.89 Bulletin 89/23**

(84) Etats contractants désignés :
**CH DE FR GB LI SE**

(56) Documents cités :
**EP–A– 0 093 183**
**DE–A– 2 029 194**
**DE–A– 2 601 165**
**DE–A– 2 942 300**
**DE–C– 726 357**
**FR–A– 2 203 068**
**FR–A– 2 468 892**
**JOURNAL OF PHYSICS E. SCIENTIFIC INSTRU-MENTS, vol. 15, no. 9, septembre 1982, pages 857-872, The Institute of Physics, Dorking, GB; U. ERDEM: "Force and weight measurement"**

(73) Titulaire : **Bongo, Lorenzo**
**Via Messina, 17**
**I-20154 Milano (IT)**

**Bongo, Guido**
**Via Messina, 17**
**I-20154 Milano (IT)**

**Bongo, Ilde**
**Via Messina, 17**
**I-20154 Milano (IT)**

(72) Inventeur : **Bongo, Lorenzo**
**Via Messina, 17**
**I-20154 Milano (IT)**
Inventeur : **Bongo, Guido**
**Via Messina, 17**
**I-20154 Milano (IT)**
Inventeur : **Bongo, Ilde**
**Via Messina, 17**
**I-20154 Milano (IT)**

---

Jouve, 18, rue St-Denis, 75001 Paris, France

## Description

Le but de l'invention est doter les balances à transducteur de force d'un dispositif d'autocalibrage de chaque pesée, pour annuler l'influence de l'accélération de gravité, dont la valeur varie suivant le lieu ; nous proposons, c'est-à-dire, un dispositif capable de compenser automatiquement, pendant les opérations de détermination de la valeur d'une masse, les effets de la variation de la valeur de l'accélération de gravité, dans un instrument de pesage à équilibrage automatique et à fonctionnement électronique, dans lequel la force engendrée par une charge à mesurer n'est pas équilibrée par une autre force poids ou par une masse pendulaire, mais par une force de nature élastique, fournie par un élément qui est déformé par effet de l'application de la charge, tels que les ressorts, les cellules de chargement, les cordes vibrantes, ou électromagnétique, fournie par une bobine plongée dans un champ magnétique, ou par n'importe quel autre type de transducteur, piézo-électrique, gyroscopique, etc.

Dans cette description, les instruments de pesage seront indiqués par le terme instruments ou balances.

La méthode de compensation de laquelle s'inspire notre dispositif est, en principe, la même qu'on retrouve dans d'autres dispositifs d'auto-compensation, tels que, par exemple, ceux qui sont décrits dans les suivantes demandes de brevet d'invention :

EP-A-0 093 183 (Art. 54 (3), (4) CEB)

DE-A1-2 601 165

La susdite méthode, bien connue dans le somaine technique auquel l'invention appartient, se fonde sur la comparaison mathématique, effectuée électroniquement, entre la force poids engendrée par la charge à mesurer et la force poids engendrée par une masse de référence (étalon), qui sert pour déterminer un facteur de correction de chaque pesée. Bien que la méthode d'autocalibrage soit la même, les caractéristiques techniques du dispositif selon l'invention sont substantiellement différentes de celles des documents EP-A-0 093 183 ou DE-A1-2 601 165.

Ces derniers sont, en effet, tous les quatre, caractérisés par le fait qu'ils prévoient, dans la balance, une masse interne de référence, qui va se poser sur les organes de l'instrument pendant la phase de détermination du coefficient de correction ; cette masse doit être jointe ou déjointe dans le système de pesage, à l'aide d'un moyen d'actionnement approprié, généralemnt connu en soi ; en outre le transducteur équilibre des charges toujours croissantes, de zéro à la portée maxima de l'instrument même.

Dans le dispositif selon la revendication, par contre, la masse de référence (étalon), qui dans l'instrument à compensation électromagnétique peut être constituée par la bobine elle-même et par les annexes relatives, charge constamment sur le transducteur, qui est ainsi pré-chargé ; par conséquent le transducteur, pendant les phases de pesage, doit équilibrer des charges toujours décroissantes, de la charge maxima à zéro ; c'est pourquoi la valeur de la masse de pré-charge, avec les annexes relatives, est choisie proche de la charge limite du dispositif équilibreur.

Par rapport aux dispositifs existants, celui-ci selon l'invention a l'avantage d'éliminer, pendant les opérations de la détermination de la valeur locale de la masse de référence, les frottements qui découlent du système de transmission de la charge, et en outre rend les relevés des valeurs de la pré-charge indépendants de toute altération possible du dispositif de transmission, comme par exemple l'adjonction ou la soustraction d'un petit poids sur le plateau, pendant les phases d'autocalibrage.

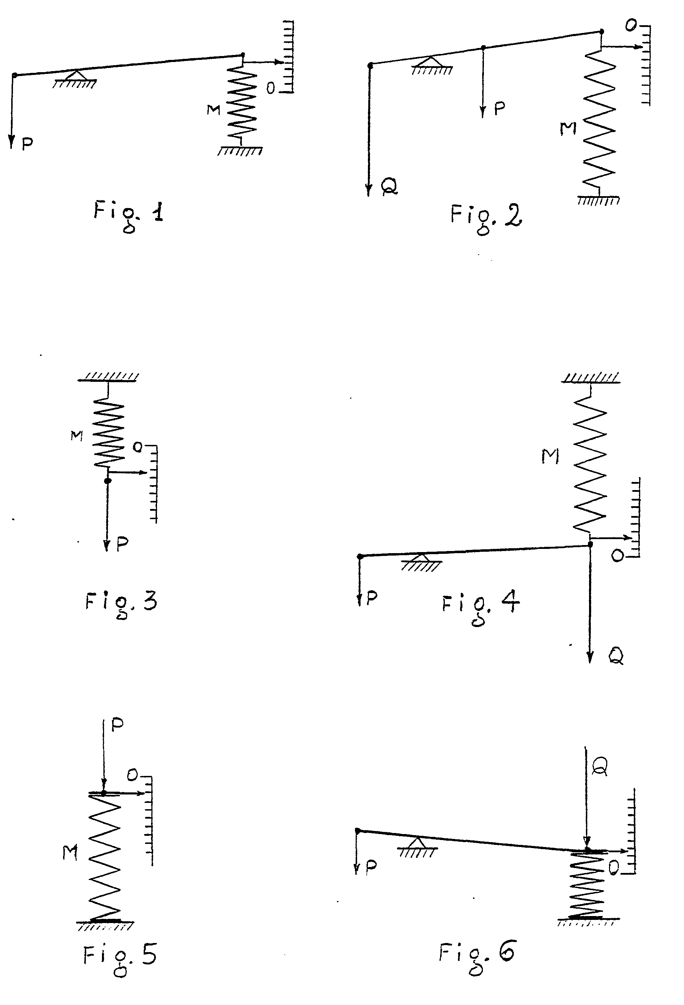

Dans les figures 1-3-5-7-9-11-13, annexées à cette description, à titre indicatif, les différents types d'instruments à transducteurs sont schématisés dans la conception habituelle de l'homme du métier ; dans les figures 2-4-6-8-10-12-14, les mêmes instruments modifiés par l'application de la masse de référence (pré-charge) Q, en indiquant par P la force engendrée par la charge sont schématisés.

Pour simplifier le plan, dans les schémas ont été omis les dispositifs de réception et de transmission de la charge ; en ce qui concerne les organes de mesurage, on a indiqué seulement les dispositifs antagonistes, en négligeant les transducteurs relatifs et les appareillages à élaboration électronique.

Dans les fig. 1 et 3, ont été schématisés deux dispositifs traditionnels de pesage à ressort en hélice, dans lesquels la charge P, directement ou réduite opportunément, est équilibrée par le ressort M, soumis à la traction ; dans les fig. 2 et 4 ont été schématisés les deux dispositifs précédents, modifiés suivant notre invention : le ressort M est préchargé par la pré-charge Q et la charge P est soustraite par elle.

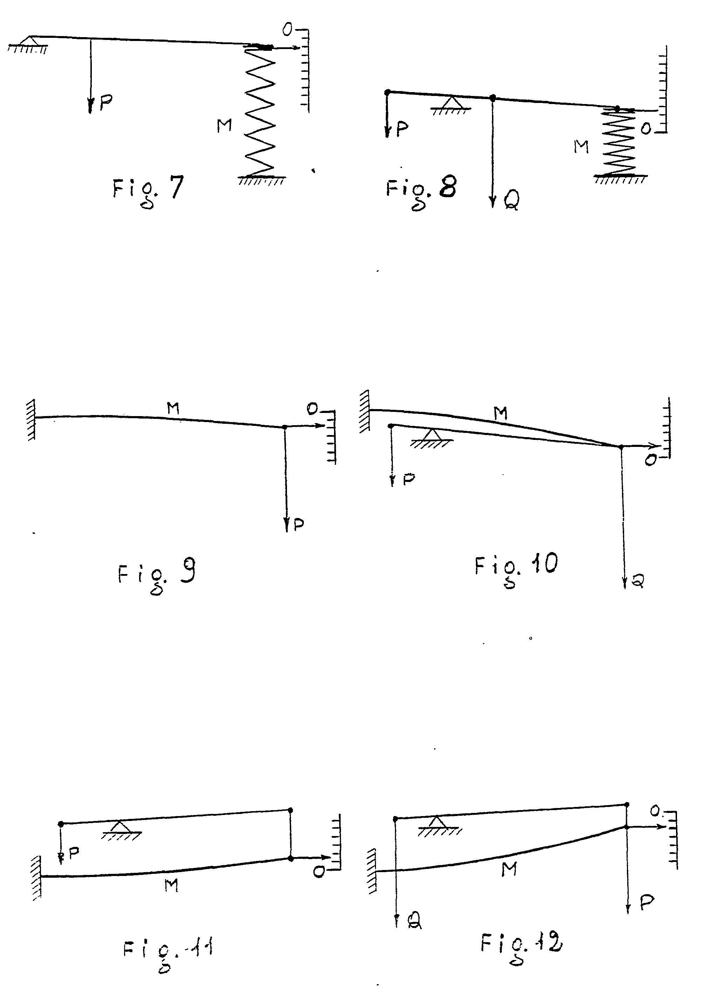

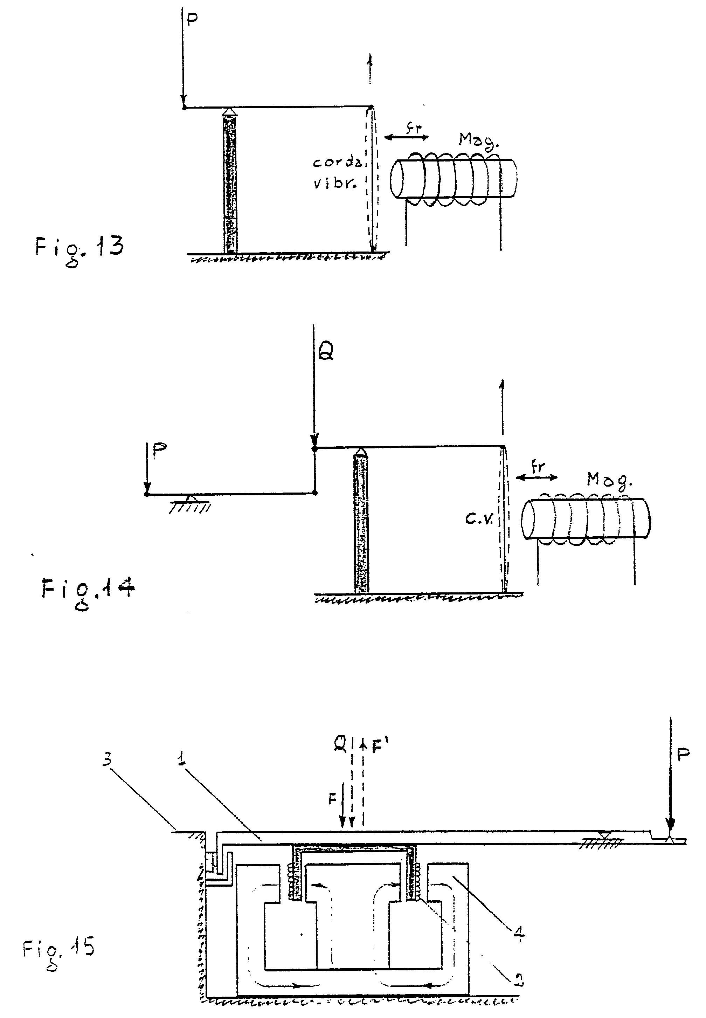

Dans les fig. 5 et 7 ont été schématisés deux dispositifs traditionnels de pesage à ressort en hélice, dans lesquels la charge P, directement ou réduite opportunément, est équilibrée par le ressort M, soumis à compression ; dans les fig. 6 et 8 ont été schématisés les deux dispositifs précédents, modifiés suivant notre invention : le ressort M est préchargé par la pré-charge Q et la charge P est soustraite par elle.

Dans les fig. 9 et 11 ont été schématisés deux dispositifs traditionnels de pesage à ressort de flexion, dans lesquels la charge P, directement ou opportunément réduite, est équilibrée par le ressort M, soumis à flexion ; dans les fig. 10 et 12 ont été schématisés les deux dispositifs précédents modifiés suivant notre invention : le ressort M est préchargé par la pré-charge Q et la charge P est soustraite par elle.

Le fonctionnement est identique si l'on utilise des ressorts d'un type différent, comme des ressorts de torsion, des ressorts en spirale, des ressorts en godet, des ressorts à lame, etc...

Le fonctionnement est identique aux cas examinés en précédence, même dans les instruments où la force antagoniste de la charge, au lieu d'un ressort, est constituée par un autre élément élastique, comme une cellule de charge (à jauges extensométriques ou autre type de transducteur), contrainte soit à compression, soit à tension soit à flexion soit à torsion.

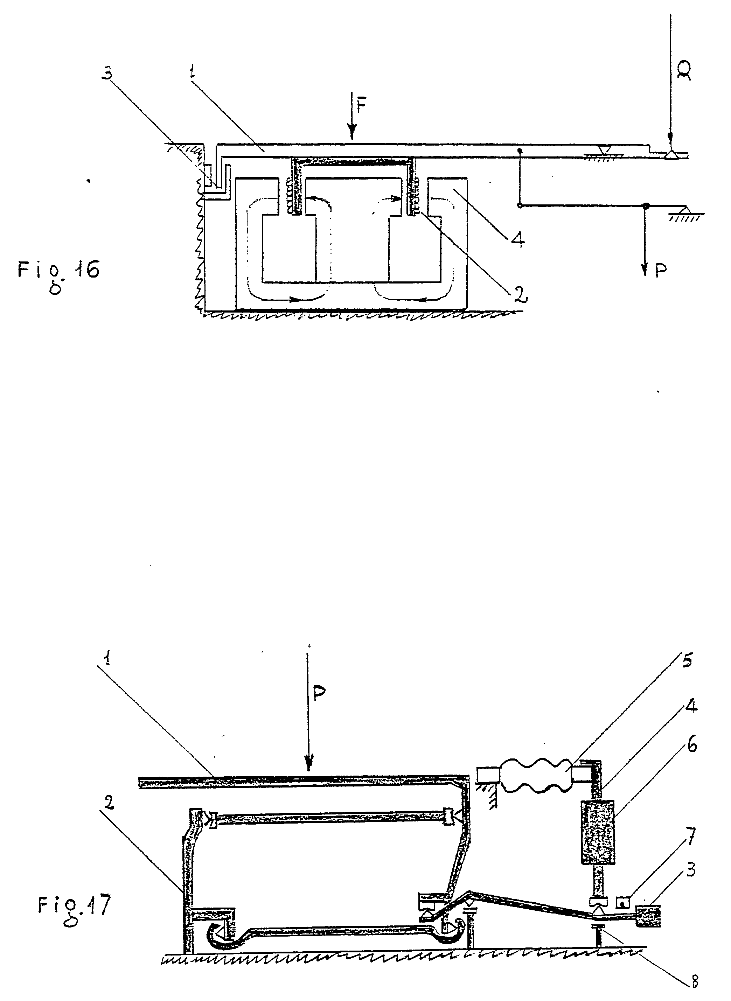

Dans les fig. 13 et 14 est schématisé un dispositif de pesage à corde vibrante, respectivement sans ou avec précharge Q.

Les dispositifs de pesage à compensation électromagnétique méritent une considéraiton à part, à propos de leur comportement, en rapport avec la pré-charge Q, qui sert de base pour la compensation automatique de la variation de l'accélération de gravité.

Le fonctionnement de ces dispositifs est analogue, aussi bien si la force d'équilibre de la charge est tournée vers le haut que si elle est tournée vers le bas.

Nous nous limitons à prendre en considération le dispositif avec une force d'équilibre F tournée vers le bas, et schématisé dans la fig. 15.

La charge P, éventuellement réduite par le dispositif approprié, est appliquée au levier (1), auquel est bloquée rigidement la bobine (2) et le détecteur de position (3). La bobine (2) est soumise à l'action du champ magnétique H, engendré par l'aimant (4), (qui peut être un aimant permanent ou un électro-aimant).

La pré-charge Q peut être appliquée, directement ou au moyen d'un levier, à la bobine (2), ayant un sens de haut en bas ou vice versa de bas en haut.

Dans le premier cas, (fig. 15 Q et F hachurés), la pré-charge Q étant tournée vers le bas, il faut lui faire contre-poids par une force de sens opposé ; puisque la force d'équilibre F de la fig. 15 était elle aussi tournée vers le bas, il faut en modifier le sens : ceci peut se produire ou en modifiant le sens du courant qui parcourt la bobine (2) ou en modifiant le sens du champ magnétique.

Comme pré-charge on peut considérer la masse proprement dite de la bobine et des annexes relatives.

Dans le deuxième cas, c'est-à-dire si la pré-charge Q, appliquée au moyen d'un levier, a le sens de bas en haut, la configuration type que prend le dispositif tout entier est schématisée dans la fig. 16.

Nous insistons sur le fait que les cas schématisés sont seulement indicatifs et qu'ils sont reportés à titre d'exemples seulement ; ils sont susceptibles de toute variation possible dans la disposition des leviers et dans l'emploi de forces antagonistes de n'importe quel type (à l'exception de celles gravimétriques) dans les dispositifs équilibreurs de la charge, dans l'emploi de transducteurs de n'importe quel type et dans l'emploi de tout appareillage d'élaboration, indication et impression des résultats de mesurage.

La propriété de l'invention consiste dans la pré-charge à laquelle, directement ou indirectement, est soumis le dispositif antagoniste de la charge. A titre illustratif le procédé selon l'invention est décrit pour la compensation automatique de la variation de l'accélération de la gravité ; il est toujours le même, dans tous les instruments à équilibre automatique, à fonctionnement électronique, dans lesquels la force antagoniste de la chage n'est pas constituée par une force poids.

Il se déroule comme décrit ci-après : lors du branchement de la tension d'alimentation dans l'instrument (allumage), un dispositif mécanique, électromécaniquen ou électromagnétique tient débranché, par le dispositif équilibreur, le dispositif de transmission de la charge ; de cette façon, la force antagoniste doit faire contrepoids à la pré-charge seulemnt et aux annexes relatives, dont la masse est connue.

Le dispositif mesureur relève la valeur locale de cette masse, (on peut faire aussi une série de relevés, en en calculant la moyenne), la compare avec la valeur d'étalonnage de celle-ci mémorisée et calcule le rapport entre les deux valeurs qui est lui aussi mémorisé. Très peu de temps après l'allumage, lorsque les opérations ci-dessus décrites ont été effectuées, le dispositif cité permet le branchement entre le dispositif équilibreur et le dispositif de transmission ; de cette façon, de la valeur de la pré-charge est soustraite la valeur correspondant aux dispositifs récepteur et transmetteur de la charge et à toutes leurs annexes : on détermine ainsi le zéro de l'instrument, qui est indiqué et/ou imprimé et/ou utilisé pour les traitements opportuns.

A partir de ce moment l'instrument est prêt à peser : la pesée, nous le rappelons, s'effectue par soustraction de la charge, éventuellement réduite, de la précharge.

La valeur de la charge est relevée par le dispositif mesureur et, avant d'être indiquée et/ou imprimée et/ou traitée est multipliée par le rapport mémorisé ci-dessus mentionné, (coefficient de compénsation), c'est-à-dire par le rapport entre la valeur de la pré-charge mémorisée sur le lieu d'étalonnage et la valeur de cette pré-charge relevée sur le lieu d'installation de la balance.

A titre explicatif, nous descrivons le procédé suivi dans une balance de comptoir, d'une portée de 12 kg, ayant un dispositif équilibreur à cellule de chargement, des jauges extensométriques, qui est représentée schématiquement dans la fig. 17, où (1) indique le dispositif récepteur qui reçoit la charge F et la transmet au moyen de la demi-disposition Roberval (2) et du levier de réduction (3) au tassage (4), branché à une cellule de chargement à jauges extensométriques, contrainte à flexion (5) ; la pré-charge Q (6) est soutenue par le tassage (4) ; un dispositif mécanique, ou électromécanique ou électromagnétique (7) permet de tenir éloignée du tassage (4) le levier (3), dont la course est arrêtée par le limiteur (8).

Supposons que la charge P soit transmise à la cellule antagoniste dans le rapport 1 : 3 ; en tenant compte du propre poids des dispositifs de réception et de transmission de la charge et d'une marge abondante de sécurité, la valeur de la précharge Q et du tassage de soutien correspondant pourra être, globalement, de 5 400 g environ, proche de la charge limite de la cellule (6 kg).

On tare la balance à l'usine, par exemple à Trieste, où l'accélération de gravité est de 9,80650496 m/sec$^2$ ; l'organe mesureur mémorise la valeur de la pré-charge et du soutien relatif, calibré opportunément ; supposons qu'elle soit de 5 400 g.

On transporte et on installe la balance à Catania, où l'accélération de gravité est de 9,80034796 m/sec$^2$ ; on allume l'instrument ; le dispositif (7) éloigne le levier (3) du tassage (4), en la posant sur le limiteur de course (8) ; le dispositif mesureur relève, une ou plusieurs fois, la nouvelle valeur de la pré-charge Q et du soutien relatif (5 396 g) et en détermine le rapport avec la valeur précédente d'étalonnage mémorisée (5 400/5 396 = 1,000741), qui devient le coefficient de compensation.

Après très peu de temps, le dispositif (7) rétablit la liaison entre le levier (3) et le tassage (4) ; l'organe mesureur détermine le zéro de l'instrument et l'indique et/ou l'imprime. A partir de ce moment, la balance est prête à peser : à chaque pesée le dispositif mesureur relève la valeur de la charge et la multiplie par le coefficient indiqué ci-dessus, (1,000741) ; le résultat sera indiqué par l'appareil visualisateur et/ou imprimé s'il le faut, et sera utilisé pour toutes les élaborations opportunes. Si nous posons donc sur le plateau de la balance un poids de 12 kg, le dispositif mesureur relèvera une valeur de 11 992 g, qui sera multipliée par le coefficient de compensation 1,000741 ; la balance indiquera ainsi 12 kg.

## Revendication

Dispositif capable de compenser automatiquement, pendant les opérations de détermination de la valeur d'une masse, les effets de la variation de la valeur accélération de gravité, dans un instrument de pesage à équilibrage automatique et à fonctionnement électronique, dans lequel la force engendrée par une charge à mesurer est équilibrée par un transducteur de force, caractérisé par le fait que le transducteur équilibreur est chargé constamment et directement ou au moyen de un ou de plusieurs leviers, par une masse de référence et des annexes relatives, ayant une valeur connue, qui est proche de la charge limite du transducteur et qui est mémorisée à l'usine par le système de mesurage et est comparée, successivement, avec la nouvelle valeur pondérale de la même pré-charge de référence, (dans ces entrefaites le transducteur est débranché par le dispositif de transmission de la charge), relative à l'accélération de gravité du lieu d'installation de la balance, pour engendrer un coefficient de compensation, qui est lui aussi mémorisé et par lequel son multipliées, avant d'être indiquées et/ou imprimées, les valeurs des différentes charges à peser relevées par le système de mesurage, permettant, à cause de la susdite caractéristique du transducteur constamment pré-chargé, de soustraite la valeur de la force engendrée par la charge à mesurer de la valeur de la masse de référence.

## Claim

Device capable of compensating automatically, during the operations of determination of the value of a mass, the effects of the variation of the value of gravitational acceleration, in an instrument for automatic weighing, with electronic operation, in which pthe force generated by a load to be measured is balanced by a force transducer, characterized by the fact that the balancing transducer is loaded constantly and directly or by means of one lever or more, by a reference mass and relative connections, with a known value, which is near the limit load of the transducer and is memorized in workshop by the measuring system, then compared with the new weight-value of the same reference preload (in the meantime the transducer is disconnected from the load transmission device), relating to the gravitational acceleration of the place of installation of the balance, to generate a coefficient of compensation, which is also memorized and for which are multiplied, before being indicated and/or printed, the values of the different loads to be weighed relating to the measuring system, making it possible, due to the abovementioned characteristic of the constantly preloaded transducer, to subtract the value of the force generated by the load to be measured from the value of the reference mass.

## Patentanspruch

Vorrichtung für die automatische Kompensation der Effekte der Schwerkraftbeschleunigungsänderungen zur Wertermittlung einer Masse bei elektronisch funktionierendem Gerät zum Abwiegen über automatischem Gleichgewicht, bei dem die von einem abzuwiegenden Last erzeugte Kraft durch einen Krafttransduktor ausgeglichen wird ; der Ausgleichstransduktor wird ständig entweder direkt oder über einen bzw. mehreren Hebeln mit einer Bezugsmasse und deren Zusammenhänge geladen, die einen bekannten dem Grenzlast nahen Wert haben. Dieser Wert wird durch das Meßsystem in der Werkstatt gespeichert und später wird er mit dem neuen Gewichtswert der gleichen Bezugsvorbelastung, die die Schwerkraftbeschleunigung der Einbaustelle der Waage betrifft, verglichen (in der Zwischenzeit ist der Transduktor von der Lastübertragungsvorrichtung getrennt). Damit wird ein Kompensationskoeffizient erzeugt, der ebenfalls gespeichert wird ; mit diesem werden die Werte der verschiedenen vom Meßsystem ermittelten abzuwiegenden Lasten multipliziert, bevor sie angezeigt und- /oder gedruckt werden. Dank der o. g. Eigenschaft des Transduktors (d. h. ständige Verbelastung) ist es möglich, den Wert der durch den abzuwiegenden Last erzeugten Kraft vom Wert der Bezugmasse abzuziehen.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

4